# EUROPÄISCHE PATENTSCHRIFT

(11) **EP 0 377 594 B1**
(45) Veröffentlichungstag und Bekanntmachung des Hinweises auf die Patenterteilung: **03.11.1993**
(21) Anmeldenummer: 88907035.5
(22) Anmeldetag: 01.08.1988
(51) Int. Cl.: A61C 17/02

(54) **VAKUUM-ZAHNPFLEGE UND ZAHNBEHANDLUNGSGERÄT**
VACUUM INSTRUMENT FOR DENTAL HYGIENE AND DENTAL TREATMENT
APPAREIL A VIDE D'HYGIENE ET DE TRAITEMENT DENTAIRES

(30) Priorität: 12.08.1987 DE 3738811
(43) Veröffentlichungstag der Anmeldung: 18.07.1990
(73) Patentinhaber: Dürr-Dental GmbH & Co. KG, D-74321 Bietigheim-Bissingen (DE)
(72) Erfinder: KASTEN, Werner, NL-8066 PZ Belt-Schutsloot (NL)
(74) Vertreter: Ostertag, Reinhard
(86) Internationale Anmeldenummer: EP8800692
(87) Internationale Veröffentlichungsnummer: WO8901319

(56) Entgegenhaltungen:
- EP-A- 0 022 150
- CH-A-29 416 4
- DE-A-29 395 31
- FR-A-25 884 69
- US-A- 2 711 586
- US-A- 3 401 690
- US-A- 3 731 675
- US-A- 4 560 351

## Beschreibung

Die Erfindung betrifft ein Gerät zur Vakuumbehandlung von Zähnen gemäß dem Oberbegriff des Anspruches 1.

Ein derartiges Gerät ist in der US-A-4 560 351 beschrieben.

Bei ihm hat das Saugteil eine ähnliche Geometrie wie ein von Zahnärzten benutzter Abdrucklöffel und überdeckt den gesamten Unter- bzw. Oberkiefer. Durch Verbinden des Saugteiles mit einer Vakuumquelle kann Speichel aus den zwischen den Zähnen und dem Zahnfleisch liegenden Raum abgesaugt werden. Bei anschließendem Zuführen von Behandlungsflüssigkeit füllen sich diese zuvor mit Speichel gefüllten Räume dann mit der Behandlungsflüssigkeit, wobei das nach Abtrennen der Vakuumquelle im Inneren des Saugteiles verbleibende Restvakuum das Ansaugen der Behandlungsflüssigkeit bewerkstelligt.

Ein ähnliches Vakuumbehandlungsgerät mit einem einen ganzen Kiefer überdeckenden Saugteil ist in der US-A-3 731 675 beschrieben. Bei ihm erfolgt die Vakuumbeaufschlagung und Flüssigkeitszufuhr so, daß man insgesamt eine senkrecht zu den Zahnflächen gerichtete Reinigungsströmung erhält.

Da das Zahnfleisch mit den interdentalen Papillen unmittelbar auf der Zahnoberfläche liegt, hat man sowohl im Bereich des Zahnhalses als auch der interdentalen Spalträume Zahnfleischtaschen in Form hauchdünner Spalte, die mehr oder minder tief sein können. Entsprechend der sehr geringen Breite dieser Spalträume hat man hohe kapillare Adhäsionskräfte. Mit beim Kauen entstehende Nahrungsmittelteilchen vermischte Flüssigkeit wird durch diese Adhäsionskräfte in diese Spalträume gezogen und wird dann nicht mehr aus diesen freigegeben. Die Speisereste verbleiben damit meist in der Tiefe der Zahnfleischtaschen, gären dort häufig und werden bakteriell zersetzt. Aus diesem Grunde ist es wichtig, die kapillaren Spalträume bis in die Tiefe mit dem Vakuum zu erreichen und dort die Adhäsionskräfte aufzubrechen.

Durch die vorliegende Erfindung soll daher ein Behandlungsgerät gemäß dem Oberbegriff des Anspruches 1 so weitergebildet werden, daß ein Entleeren der Spalträume mit besserem Wirkungsgrad erfolgt, und dies bei einfachem und preisgünstigem Aufbau des Behandlungsgerätes.

Diese Aufgabe ist erfindungsgemäß gelöst durch ein Behandlungsgerät gemäß Anspruch 1.

Bei dem erfindungsgemäßen Behandlungsgerät findet ein trichterförmiges Saugteil Verwendung. Zu einem vorgegebenen Zeitpunkt wird somit nur ein Teilbereich des Gebisses behandelt.

Es sind zwar auch andere Zahn-Behandlungsgeräte bekannt, bei denen ein nur einen kleinen Querschnitt aufweisendes Saugteil vorgesehen ist, in welches eine Reinigungs- oder Spülflüssigkeit abgegeben wird.

Ein Beispiel hierfür ist die EP-B1 0 022 150. Bei diesem bekannten Behandlungsgerät dient das Vakuum aber dazu, überschüssige Flüssigkeit direkt vom Zahn wieder abzusaugen.

Eine Vakuumbeaufschlagung von Zahntaschen ist bei diesem Gerät nicht vorgesehen.

In der CH-A 294 164 ist ein Gerät zur Behandlung von Zahnkavitäten und Wurzelkanälen beschrieben, bei welchem eine Saugkappe dicht auf das obere Ende des Zahnes aufgesetzt wird. Über verschiedene Leitungen, die zur Saugkappe führen, kann das Zahninnere evakuiert und anschließend mit einer Behandlungsflüssigkeit gefüllt werden. Dieses bekannte Gerät ist jedoch nicht zur Reinigung von Zahntaschen bestimmt oder geeignet.

Die FR-A 2 588 469 zeigt ein Reinigungsgerät für Zähne, bei welchem scharfe Flüssigkeitsstrahlen gegen die zu reinigenden Zähne gerichtet werden und die verbrauchte Reinigungsflüssigkeit von einer die Strahldüsenanordnung umgegebenden Schaumstoffwand aufgesaugt wird. Auch mit diesem Reinigungsgerät hat man keinen Zugang zum Innenraum von Zahntaschen.

Die DE-A 29 39 531 zeigt ein Gerät zur Behandlung von Zahnkanälen, bei welchem um eine ein Medikament abgebende Kanüle herum ein Absaugrohr vorgesehen ist, um überschüssige Flüssigkeit zurückzusaugen.

Die Verwendung elastischer Saugspitzen ist an sich auf dem Gebiet der Zahnmedizin für das Absaugen von Bohrklein bekannt, wie die US-A 2 711 586 zeigt. Mit einer derartigen Saugspitze für sich allein genommen erhält man jedoch bei einem bestimmungswidrigen Aufsetzen auf den Übergangsbereich Zahn/Zahnfleisch noch keine zufriedenstellende Reinigung von Zahntaschen; hierzu ist zusätzlich ein Flüssigkeitsaustausch notwendig, wie er bei dem erfindungsgemäßen Behandlungsgerät durch die Zufuhr von Flüssigkeit zum Inneren des trichterförmigen Saugteiles erhalten wird.

Vorteilhafte Weiterbildungen der Erfindung sind in Unteransprüchen angegeben.

Beaufschlagt man das Innere des trichterförmigen Saugteiles intermittierend mit Vakuum, so erhält man eine besonders gute Entleerung und Säuberung der Zahntaschen. Beim Abschalten des Vakuums werden nämlich die kapillaren Adhäsionskräfte in den Spalträumen wieder wirksam und ziehen nun die Spülflüssigkeit in sich hinein. Wird das Vakuum wieder eingeschaltet, werden die kapillaren Adhäsionskräfte wieder aufgehoben und der Spaltraum entleert. Man erhält somit insgesamt einen Pumpeffekt, welcher nicht nur das Ausspülen der Zahnfleischtaschen gewährleistet sondern auch das Einbringen von Medikamenten bis auf den Taschengrund sicherstellt. Durch den wiederholten Austausch des in der Zahnfleischtasche befindlichen Flüssigkeitsvolumens erhält man insgesamt eine optimale Reinigung des Spaltraumes von Verunreinigungen (gärfähige Fremdstoffe, Bakterienkongolmerate usw.). Dadurch werden paradontitische Prozesse nicht nur verhütet sondern auch kausal angegangen. Die Spalträume sind sonst häufig

Ausgangspunkt von Entzündungen und damit auch Zahnkaries. Durch die regelmäßige Anwendung des erfindungsgemäßen Behandlungsgerätes können somit erhebliche Kosten beim Zahnersatz eingespart werden.

Nachstehend wird die Erfindung anhand eines Ausführungsbeispieles unter Bezugnahme auf die Zeichnung näher erläutert. In dieser zeigen:
- Figur 1:: einen schematischen Längsschnitt durch ein Gerät zur Vakuumbehandlung von Zahnfleischtaschen; und
- Figur 2:: den zeitlichen Verlauf der Vakuum- und Flüssigkeitsbeaufschlagung einer Saugkappe des Behandlungsgerätes nach Figur 1.

Bei dem in der Zeichnung wiedergegebenen Behandlungsgerät sitzt eine auswechselbare trichterförmige elastische Saugkappe 1 auf einem Saugrohr 3. Innerhalb der Saugkappe 1 befindet sich eine ebenfalls auswechselbare Abgabekanüle 2 für Behandlungsflüssigkeit (Spülflüssigkeit oder Medikament). Auf die Enden eines zylindrischen Handstückes 5 sind zwei Verschlußdeckel 4 und 6 aufgesteckt. Am Verschlußdeckel 6 ist eine Saugleitung 8 ebenso befestigt wie eine Speiseleitung 7, über welche die Behandlungsflüssigkeit zur Abgabekanüle 2 geführt wird.

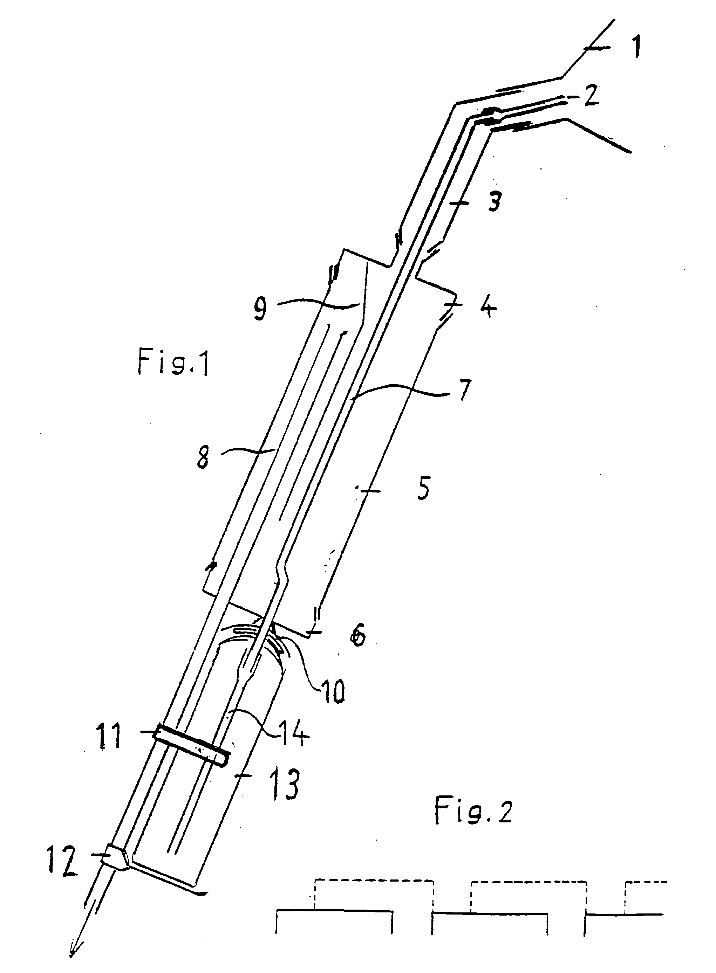

Am in Figur 1 unten liegenden Ende der Speiseleitung 7 befinden sich Ampullen-Halterungsteile 10, 11 und 12 für eine die Spülflüssigkeit bzw. das Medikament enthaltende Ampulle 13. In dem oberen Halterungsteil 10 ist ein nicht im einzelnen gezeigtes Luftzufuhrventil vorgesehen, über welches der Behandlungsflüssigkeitsstrom gesteuert werden kann. Ist das Ventil geöffnet, wird die Behandlungsflüssigkeit durch das in der Saugkappe 1 herrschende Vakuum in die Speiseleitung 7 und die Abgabekanüle 2 gezogen.

Das untere Halterungsteil 12 ist verschiebbar, so daß Ampullen unterschiedlicher Größe eingesetzt werden. Auf das ampullenseitige Ende der Speiseleitung 7 ist eine Ansaugkanüle 14 lösbar aufgesetzt, die je nach Größe der Ampulle sowie der einzubringenden Menge an Behandlungsflüssigkeit (Spülflüssigkeit oder Medikament) gewählt wird.

Die Saugleitung 8 ist an eine in der Zeichnung nicht wiedergegebene Vakuumpumpe über ein Abschaltventil sowie ein Rotations-Drosselventil verbunden. Letzteres stellt einerseits die Größe des Vakuums auf einen zwischen 100 und 150 mm Hg liegenden Wert ein und sorgt zum anderen für eine intermittierende Vakuumbeaufschlagung der Saugkappe 1 für ein gleitendes Zeitintervall von 1 bis 5 Sekunden. Die Ventilbedienung erfolgt über das Handstück 5.

Wie oben schon dargelegt, ist die intermittierende Vakuumbeaufschlagung der Saugkappe 1 im Hinblick auf ein gutes Reinigen der Zahnfleischtaschen von besonderer Bedeutung.

Wie aus Figur 2 ersichtlich, erfolgt die Zugabe von Behandlungsflüssigkeit (gestrichelte Linien) durch Einschalten des oben angesprochenen Luftzufuhrventiles, welches der Ampulle 13 zugeordnet ist, zunächst innerhalb der durch ausgezogene Linien wiedergegebenen Vakuumbeaufschlagung. Dann befindet sich wegen der Überwindung der kapillaren Adhäsionskräfte der Tascheninhalt außerhalb, also im Bereich der Taschenöffnung, so daß sich die Behandlungsflüssigkeit mit dem Tascheninhalt vermischen kann. Ist ein Flüssigkeitssäulen-Kontakt zwischen dem bei der Taschenöffnung befindlichen flüssigen Tascheninhalt und der Behandlungsflüssigkeit hergestellt, kann dieses Flüssigkeitsvolumen abgesaugt und entfernt werden.

Wird durch das Rotationsdrosselventil die Vakuumbeaufschlagung der Saugkappe 1 beendet, diese also belüftet, so werden die kapillaren Adhäsionskräfte wieder wirksam und saugen Flüssigkeit in die Zahnfleischtasche zurück. Die nun im Bereich der Taschenöffnung anstehende Flüssigkeit ist aber Behandlungsflüssigkeit, die auch nach Beendigung der Vakuumbeaufschlagung weiterhin in die Saugkappe 1 geleitet wird, wie in Figur 2 durch gestrichelte Linien angedeutet.

Wird der oben beschriebene Austauschvorgang einige Male wiederholt, ist es schließlich nur noch Behandlungsflüssigkeit, die den gesamten Taschenraum füllt, wie sich aufgrund von Methylenblau-Versuchen nachweisen läßt. Als mittlere Länge der Vakuumbeaufschlagung bzw. Behandlungsflüssigkeitsbeaufschlagung der Saugkappe hat sich eine Zeitspanne von drei Sekunden als geeignet erwiesen. Dabei sind die beiden Beaufschlagungszeiträume zeitlich gegeneinander versetzt, so daß man eine erste Zyklusphase von einer Sekunde erhält, in welcher die Saugkappe 1 nur mit Vakuum beaufschlagt ist, eine zweite Zyklusphase von zwei Sekunden erhält, in welcher die Saugkappe gleichzeitig mit Vakuum und Behandlungsflüssigkeit beaufschlagt wird, und eine dritte Zyklusphase von einer Sekunde erhält, in welcher die Saugkappe 1 nur mit Behandlungsflüssigkeit beaufschlagt wird. Durch die erste Zyklusphase mit reiner Vakuumbeaufschlagung wird zunächst der Spaltraum entleert. Durch die dann einsetzende Flüssigkeitszufuhr wird der sich nun am Oberrand der Tasche befindliche Tascheninhalt weggespült. Nach dieser zwei Sekunden andauernden kombinierten Einwirkung wird das Vakuum abgeschaltet, und durch das nun wieder die überhand Gewinnen der kapillaren Adhäsionskräfte wird Behandlungsflüssigkeit in die Zahntasche hineingesogen. Dieser Vorgang ist auf eine Sekunde begrenzt. Es folgt nun ein weiterer Flüssigkeitsaustauschzyklus, wie er soeben im einzelnen beschrieben wurde, beginnend mit der ersten Zyklusphase der reinen Vakuumbeaufschlagung der Saugkappe 1.

Bei Medikamentenzugabe wird das Vakuum bzw. der Zulauf von Behandlungsflüssigkeit gesondert gesteuert, damit das Medikament auf die Taschenöffnung auftropfen kann. Nach Abschalten des Vakuums werden die kapillaren Adhäsionskräfte wirksam, wodurch das Medikament in die Tasche gelangt. Aufgrund von Methylenblau-Versuchen ist bekannt, daß das Medikament bis auf den Grund der Tasche gelangt. Da bei einer solchen Steuerung der Zuführung der Behandlungsflüssigkeit jeweils nur wenige Tropfen des Medikamentes in den Bereich der Taschenöffnung gelangen, verbleibt diese kleine Flüssigkeitsmenge im Bereich des Taschenrandes und wird bei Abschaltung des Vakuums in den subgingivalen Raum gesogen. Es ist somit eine recht exakte Dosierung des Medilamentes möglich.

## Patentansprüche

1. Gerät zur Vakuumbehandlung von Zähnen mit einem elastischen Saugteil (1), welches dicht auf das Gebiß eines Patienten aufsetzbar ist, mit einer Spülvorrichtung (2, 7, 10 bis 14) zum Zuführen von Flüssigkeit ins Innere des Saugteiles (1) und mit einer mit dem Saugteil (1) verbindbaren Vakuumquelle, die im Saugteil ein Vakuum aufbauen kann, welches so groß ist, daß die auf die Mundflüssigkeit ausgeübte Saugkraft größer ist als die kapillare Adhäsionskraft, welche auf die Mundflüssigkeit in einer Zahnfleischtasche bzw. im interdentalen Raum einwirkt, und wobei auf eine erste Behandlungsphase, in welcher über eine vorgegebene Zeitspanne hinweg nur eine Vakuumbeaufschlagung des Saugteiles (1) erfolgt, eine zweite Behandlungsphase erfolgt, in welcher das Saugteil (1) durch die Spülvorrichtung (2, 7, 10 bis 14) mit Flüssigkeit beaufschlagt wird, dadurch gekennzeichnet, daß das Saugteil (1) trichterförmig ist und seine Form und sein Material so gewählt sind, daß beim Aufsetzen seines Randes auf die Oberfläche des Zahnfleisches und des angrenzenden Zahnes ein geschlossener Vakuumraum erhalten wird; daß die Unterdruckbeaufschlagung des Saugteiles (1) während der zweiten Behandlungsphase beibehalten und am Schluß der zweiten Behandlungsphase abgeschaltet wird; und daß eine Mehrzahl von Zyklen, die jeweils eine erste und zweite Behandlungsphase umfassen, nacheinander durchgeführt werden.

2. Behandlungsgerät nach Anspruch 1, dadurch gekennzeichnet, daß anschließend an die zweite Behandlungsphase eine dritte Behandlungsphase erfolgt, in welcher dem Saugteil (1) nur über die Spülvorrichtung (2, 7, 10 bis 14) Flüssigkeit zugeführt wird, während die Vakuumbeaufschlagung beendet ist.

3. Behandlungsgerät nach Anspruch 1 oder 2, dadurch gekennzeichnet, daß das Vakuum während der ersten und zweiten Behandlungsphase konstant gehalten wird.

4. Behandlungsgerät nach einem der Ansprüche 1 bis 3, dadurch gekennzeichnet, daß der Rand des Saugteiles (1) konisch ist.

5. Behandlungsgerät nach einem der Ansprüche 1 bis 4, dadurch gekennzeichnet, daß die Spülvorrichtung (2, 7, 10 bis 14) eine ins Innere des Saugteils (1) ragende Abgabekanüle (2) aufweist.

6. Behandlungsgerät nach Anspruch 5, dadurch gekennzeichnet, daß die Abgabekanüle (2) auswechselbar ist.

7. Behandlungsgerät nach einem der Ansprüche 1 bis 6, dadurch gekennzeichnet, daß das Saugteil (1) lösbar auf dem von der Vakuumquelle abliegenden Ende einer Saugleitung (3 bis 6, 8) sitzt, über welche das Saugteil (1) mit der Vakuumquelle verbunden ist.

8. Behandlungsgerät nach Anspruch 7, dadurch gekennzeichnet, daß auf ein Handstück (5) zwei Verschlußdeckel (4, 6) aufgesteckt sind, von denen einer (4) ein das Saugteil (1) tragendes Saugrohr (3) trägt, während am anderen (6) eine mit der Vakuumquelle verbindbare Saugleitung (8) befestigt ist.

9. Behandlungsgerät nach einem der Ansprüche 1 bis 8, dadurch gekennzeichnet, daß das im Saugteil (1) herrschende Vakuum durch eine Drossel auf einen zwischen 100 und 150 mm Hg liegenden Wert eingestellt ist.

10. Behandlungsgerät nach einem der Ansprüche 1 bis 9, dadurch gekennzeichnet, daß das Vakuumbeaufschlagungsintervall gleitend von 1 bis 5 sec eingestellt werden kann.

11. Behandlungsgerät nach einem der Ansprüche 1 bis 10, dadurch gekennzeichnet, daß die Spülvorrichtung (2, 7, 10 bis 14) eine Ampulle (13) sowie eine Vorrichtung (10 bis 12) zum Haltern derselben an einem als Handstück (5) ausgebildeten Geräteabschnitt aufweist, wobei die Ampulle (13) eine Behandlungsflüssigkeit enthält und über ein Ventil an eine Speiseleitung (7) angeschlossen ist, die zum Saugteil (1) führt.

## Claims

1. Instrument for the vacuum treatment of teeth, comprising an elastic suction part (1) which can be placed tightly on a patient's set of teeth, rinsing means (2, 7, 10 to 14) for feeding liquid into the interior of the suction part (1) and a vacuum source which can be connected to the suction part (1) and is able to produce a sufficiently high vacuum in the suction part that the suction force exerted on the oral fluid is greater than the capillary adhesion force acting on the oral fluid in a gingival pocket and the interdental crevice, and wherein, during a first treatment phase in which only the vacuum is applied to the suction part (1) for a predetermined period, a second treatment phase takes place in which liquid is supplied to the suction part (1) by the rinsing means (2, 7, 10 to 14), characterised in that the suction part (1) is funnel-shaped and its shape and material are so chosen that, when the edge thereof is placed on the surface of the gum and the adjoining tooth, a closed vacuum chamber is obtained; that the vacuum applied to the suction part (1) is maintained during the second treatment phase and is switched off at the end of the second treatment phase; and that a number of cycles each comprising a first and second treatment phase is carried out in succession.

2. Treatment instrument according to claim 1, characterised in that, following the second treatment phase, a third treatment phase takes place in which only liquid is supplied to the suction part (1) by means of the rinsing means (2, 7, 10 to 14) while the vacuum has ceased to be applied.

3. Treatment instrument according to claim 1 or 2, characterised in that the vacuum is kept constant during the first and second treatment phases.

4. Treatment instrument according to any one of claims 1 to 3, characterised in that the edge of the suction part (1) is conical.

5. Treatment instrument according to any one of claims 1 to 4, characterised in that the rinsing means (2, 7, 10 to 14) have a delivery cannula (2) projecting into the interior of the suction part (1).

6. Treatment instrument according to claim 5, characterised in that the delivery cannula (2) is exchangeable.

7. Treatment instrument according to any one of claims 1 to 6, characterised in that the suction part (1) is removably seated on the end, remote from the vacuum source, of a suction line (3 to 6, 8) via which the suction part (1) is connected to the vacuum source.

8. Treatment instrument according to claim 7, characterised in that two sealing covers (4, 6) are plugged onto a hand piece (5), one (4) of which sealing covers carries a suction tube (3) carrying the suction part (1) while a suction line (8) which can be connected to the vacuum source is fastened to the other sealing cover (6).

9. Treatment instrument according to any one of claims 1 to 8, characterised in that the vacuum in the suction part (1) is set by a throttle to a value between 100 and 150 mm Hg.

10. Treatment instrument according to any one of claims 1 to 9, characterised in that the period for which the vacuum is applied can be set in a sliding manner from 1 to 5 seconds.

11. Treatment instrument according to any one of claims 1 to 10, characterised in that the rinsing means (2, 7, 10 to 14) have an ampoule (13) and an arrangement (10 to 12) for holding the same on a portion of the instrument in the form of a hand piece (5), the ampoule (13) containing a treatment liquid and being connected via a valve to a supply line (7) which leads to the suction part (1).

## Revendications

1. Appareil pour traiter des dents sous vide, comportant une partie aspirante (1) souple qui peut être placée de manière hermétique sur la denture d'un patient, un dispositif de rinçage (2, 7, 10 à 14) pour amener du liquide à l'intérieur de la partie aspirante (1) et une source de vide pouvant être reliée à la partie aspirante (1) et pouvant faire le vide dans la partie aspirante de telle manière que la force d'aspiration qui s'exerce sur la salive soit plus grande que la force d'adhérence capillaire qui agit sur la salive dans une alvéole dentaire ou dans l'espace interdental, sachant que, après une première phase de traitement, dans laquelle on fait uniquement le vide dans la partie aspirante pendant un laps de temps donné, intervient une deuxième phase de traitement dans laquelle la partie aspirante (1) est remplie de liquide par le dispositif de rinçage (2, 7, 10 à 14), caractérisé en ce que la partie aspirante (1) a la forme d'un entonnoir et que sa forme et son matériau sont choisis de manière à obtenir un espace de vide fermé en appliquant son bord sur la surface de la gencive et de la dent adjacente, en ce que le vide est entretenu dans la partie aspirante (1) au cours de la deuxième phase de traitement et est rompu à la fin de cette deuxième phase de traitement, et en ce que de nombreux cycles comportant chacun une première et une deuxième phase de traitement se succèdent les uns aux autres.

2. Appareil de traitement selon la revendication 1, caractérisé en ce qu'après la seconde phase de traitement intervient une troisième phase de traitement dans laquelle la partie aspirante (1) est seulement alimentée en liquide par le dispositif de rinçage (2, 7, 10 à 14), tandis qu'on a cessé de faire le vide.

3. Appareil de traitement selon la revendication 1 ou 2, caractérisé en ce que le vide est maintenu constant pendant la première et la deuxième phase de traitement.

4. Appareil de traitement selon l'une des revendications 1 à 3, caractérisé en ce que le bord de la partie aspirante (1) est conique.

5. Appareil de traitement selon l'une des revendications 1 à 4, caractérisé en ce que le dispositif de rinçage (2, 7, 10 à 14) présente une canule d'éjection (2) faisant saillie dans la partie aspirante (1).

6. Appareil de traitement selon la revendication 5, caractérisé en ce que la canule d'éjection (2) est remplaçable.

7. Appareil de traitement selon l'une des revendications 1 à 6, caractérisé en ce que la partie aspirante (1) est posée de manière amovible sur l'extrémité opposée à la source de vide d'une conduite d'aspiration (3 à 6, 8) reliant la partie aspirante (1) à la source de vide.

8. Appareil de traitement selon la revendication 7, caractérisé en ce que deux couvercles de fermeture (4, 6), dont l'un (4) porte un tube d'aspiration (3) portant la partie aspirante (1), tandis qu'une conduite d'aspiration (8) pouvant être reliée à la source de vide est fixée sur l'autre, sont montés sur une pièce-à-main (5).

9. Appareil de traitement selon l'une des revendications 1 à 8, caractérisé en ce que le vide qui règne dans la partie aspirante (1) est réglé par un étranglement sur une valeur comprise entre 100 et 150 mm Hg.

10. Appareil de traitement selon l'une des revendications 1 à 9, caractérisé en ce que le réglage de l'intervalle dans lequel le vide se fait peut varier de 1 à 5 sec.

11. Appareil de traitement selon l'une des revendications 1 à 10, caractérisé en ce que le dispositif de rinçage (2, 7, 10 à 14) présente une ampoule (13) et un dispositif (10 à 12) pour maintenir cette dernière sur une section de l'appareil réalisée sous forme de pièce à main (5), l'ampoule contenant un liquide de traitement et étant raccordée par un clapet à une conduite d'alimentation (7) menant à la partie aspirante (1).
